# FASCICULE DE BREVET EUROPEEN

(11) **EP 1 005 914 B1**
(45) Date de publication et mention de la délivrance du brevet: **04.02.2004**
(21) Numéro de dépôt: 98402946.2
(22) Date de dépôt: 26.11.1998
(51) Int. Cl.: B05B 11/00

(54) **Pompe manuelle à piston libre à manchette sollicitée par ressorts en matière plastique**
Handpumpe mit durch Plastikfedern beaufschlagtem Freikolben
Manual pump with free sleeve piston biassed by plastics springs

(43) Date de publication de la demande: 07.06.2000
(73) Titulaire: VALOIS S.A.S., 27110 Le Neubourg (FR)
(72) Inventeur: Garcia, Firmin, 27000 Evreux (FR); Lecoutre, Jean-Paul, 27160 Breteuil-sur-Iton (FR); Chavigny, Daniel, 27130 Balines (FR); Croibier, Denis, 28270 Brezolles (FR)
(74) Mandataire: CAPRI

(56) Documents cités:
- FR-A- 2 678 906
- US-A- 4 607 765
- US-A- 4 762 475
- US-A- 4 785 975

## Description

La présente invention concerne une pompe manuelle qui peut être montée sur un réservoir et actionnée pour distribuer le produit contenu dans le réservoir.

Selon une conception conventionnelle, une pompe manuelle comprend un corps de pompe définissant une chambre de pompe dans laquelle est disposé un piston coulissant monté sur une tige d'actionnement. Un bouton-poussoir est monté sur l'extrémité supérieure de la tige d'actionnement au-dessus du corps de pompe. La tige d'actionnement a un passage/conduit interne de décharge établissant une communication entre la chambre de pompe et le bouton-poussoir. Le poussoir a un orifice de distribution à partir duquel le produit fluide est distribué. L'ouverture d'entrée du conduit ou passage de décharge est obturée au repos par le piston, ce qui forme le clapet de sortie. La pompe peut être actionnée en enfonçant le bouton-poussoir de manière à créer un mouvement relatif entre la tige d'actionnement et le piston du fait de l'augmentation de pression dans la chambre de pompe, et le mouvement relatif ouvre le passage de décharge. Un ressort agit sur la tige d'actionnement pour la ramener vers le haut avec le piston dans une position de repos, lorsque la pression du doigt est relâchée. Un certain nombre de pompes connues comprend également un ressort entre la partie supérieure de la tige d'actionnement et le piston pour appliquer une force destinée à maintenir la tige d'actionnement et le piston dans une position relative dans laquelle le passage de décharge est fermé. Une telle force est surmontée lorsque la pression à l'intérieur de la chambre augmente suffisamment. Bien que de telles conceptions de pompe offrent un fonctionnement généralement satisfaisant, il y a un besoin pour un système amélioré pour solliciter le piston et la tige d'actionnement dans une position fermée.

Un certain nombre de documents de l'art antérieur offre des solutions alternatives. Par exemple, le document FR-1 544 683 décrit une pompe comprenant une tige d'actionnement sur laquelle est monté un piston libre obturant au repos le passage de décharge de la tige d'actionnement. Le piston libre est sollicité dans sa position de repos fermant le passage de décharge par une manchette flexible qui fait partie intégrante du piston. L'extrémité supérieure de la manchette flexible est solidaire de la tige d'actionnement et crée à cet endroit un contact étanche. Au repos, la manchette est parfaitement cylindrique, mais dès que l'on exerce une pression sur la tige d'actionnement, le piston remonte sous l'effet de la pression en déformant la manchette de manière à lui conférer un profil ventru. Cette solution palliative au ressort de rappel du piston libre présente cependant plusieurs inconvénients. On a d'abord constaté que cette pompe est rapidement sujette à des fuites du fait de la déformation de la manchette qui ne reprend plus à court terme sa condition parfaitement cylindrique de repos. En effet, étant donné que les contraintes s'exercent axialement dans la manchette, il s'ensuit très rapidement une diminution de la longueur de la manchette. Du fait que la manchette est maintenue à son extrémité supérieure, elle ne peut donc plus venir en contact étanche avec son extrémité inférieure pour fermer le passage de décharge. En outre, la mise en place du piston libre est relativement compliquée du fait qu'il faut serrer l'extrémité supérieure de la manchette sur la tige pour créer un contact étanche. Cette opération est techniquement très compliquée.

Le document US 4 762 475 décrit une pompe comprenant une manchette de piston identique à celle du document

FR 1 544 683 précité. Le préambule de la revendication principale est d'ailleurs basé dessus.

La présente invention a pour but de pallier les inconvénients précités de l'art antérieur en définissant une pompe à piston libre sollicitée en position fermée dont le montage est simple et dont le fonctionnement est garanti contre tous risques de fuite.

Pour atteindre ce but, la présente invention propose une pompe manuelle conforme à la revendication principale. Le ou les ergot(s) peut(vent) faire partie intégrante du piston ou de la tige d'actionnement. Ils peuvent également être formés sur une pièce séparée. Avantageusement, ils peuvent être moulés dans un matériau thermoplastique. Avantageusement, ledit ergot a une extrémité distale décalée latéralement qui peut être fléchie de manière résiliente vers ledit piston pour réaliser la séparation de ladite tige de soupape interne du piston et dudit siège de soupape de la partie inférieure de l'organe d'actionnement lorsque la pression à l'intérieur de ladite chambre augmente suffisamment. De préférence, ledit au moins ergot effectue un fléchissement latéral sans faire de fléchissement radial vers l'extérieur en direction dudit corps de pompe.

La présente invention sera maintenant plus amplement décrite en référence aux dessins joints donnant à titre d'exemple non limitatif un mode de réalisation de l'invention.

Sur les dessins :
- la figure 1 est une vue en coupe d'une pompe selon l'invention en position de repos,
- la figure 2 est une vue similaire à celle de la figure 1, mais représentant la pompe dans une position complètement actionnée,
- la figure 3 est une vue similaire à celle de la figure 2, mais dans une position de retour vers la position de repos,
- la figure 4 est une vue en section prise le long de la ligne de coupe 4-4 de la figure 1,
- la figure 5 est une vue en section prise le long de la ligne de coupe 5-5 de la figure 1,
- la figure 6 est une vue en section prise le long de la ligne de coupe 6-6 de la figure 1,
- la figure 7 est une vue fragmentaire en élévation d'un ergot selon l'invention en position de repos,
- la figure 8 est une vue similaire à celle de la figure 7 d'un ergot selon l'invention sous contrainte,
- la figure 9 est une vue agrandie en perspective de dessous du piston libre,
- la figure 10 est une vue en perspective agrandie du dessus du piston, et
- la figure 11 est une vue de dessus en perspective de la partie inférieure de la tige d'actionnement.

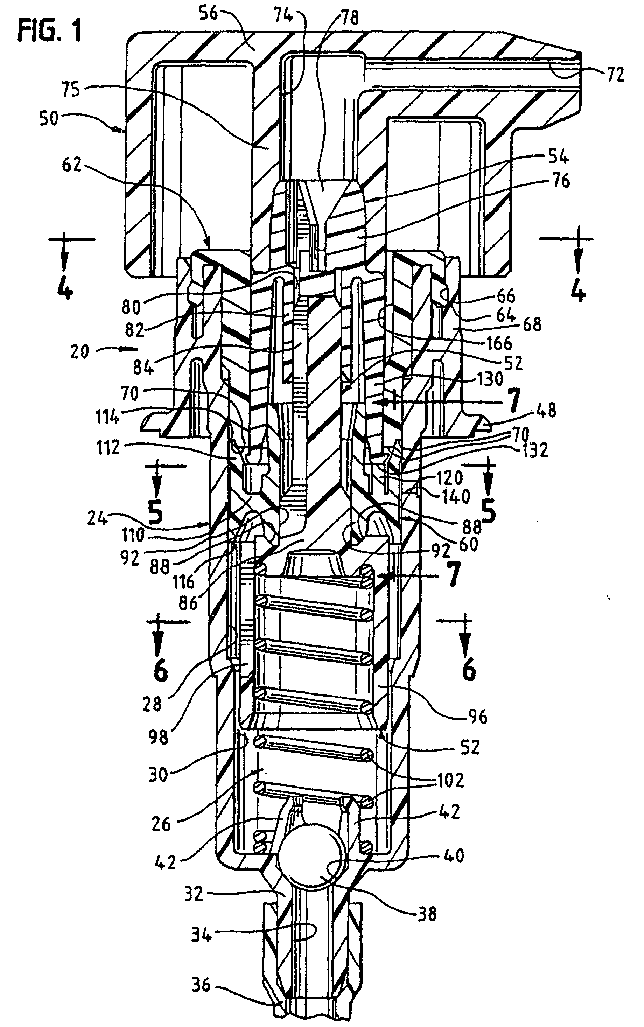

En se référant à la figure 1, la pompe de la présente invention est désignée dans son ensemble par la référence numérique 20. La pompe 20 est adaptée à être montée sur un récipient (non représenté) qui contient un produit liquide. Pour la fixation sur le réservoir, on peut se servir de n'importe quelle technique appropriée, telle que l'encliquetage, le vissage ou le sertissage.

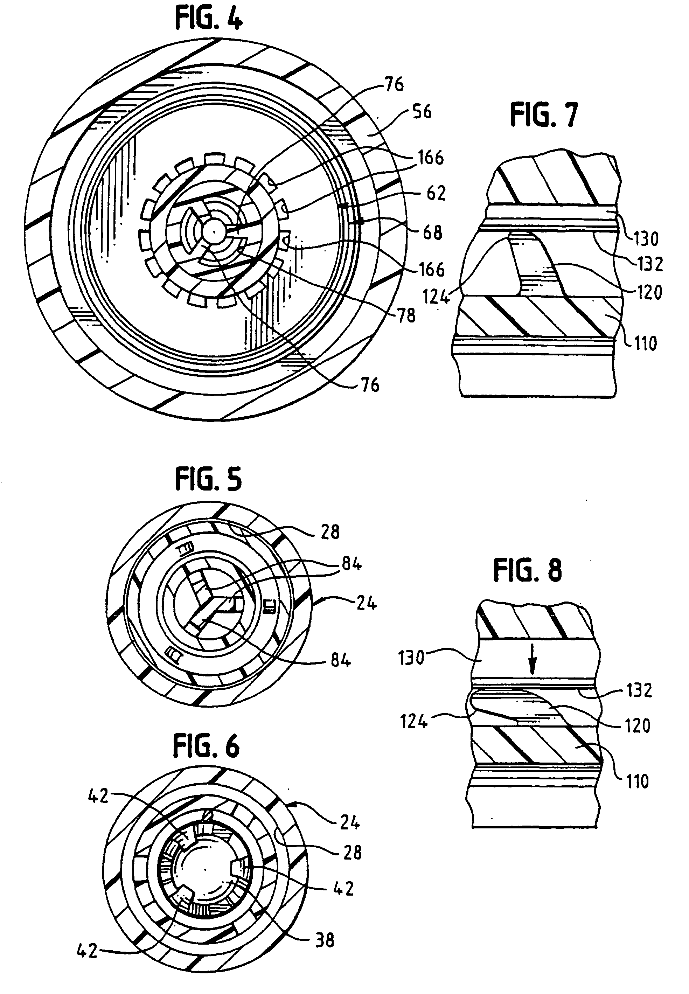

La pompe 20 comprend un corps principal 24 définissant une chambre de pompe 26 comprenant une partie cylindrique supérieure 28 et une partie cylindrique inférieure 30. L'extrémité inférieure du corps de pompe 24 comprend une partie tubulaire 32 s'étendant vers le bas en définissant une ouverture d'entrée 34 au fond de la partie cylindrique inférieure 30 de la chambre de pompe 26. La partie tubulaire 32 est adaptée à recevoir un tube plongeur 36. Une bille de clapet d'entrée 38 est située à l'entrée de la pompe 34. La bille 38 repose normalement sur une surface tronconique 40 définissant un siège de clapet. Comme représenté sur les figures 1 et 6, la bille 38 est prisonnière d'un logement défini par des bras de retenue 42. Lorsqu'une surpression règne dans la chambre de pompe, la bille est plaquée sur la surface tronconique 40, et dès qu'une dépression se forme dans la chambre, la bille est soulevée de son siège tronconique 40 permettant ainsi l'entrée de produit fluide à partir du réservoir à travers le tube plongeur 36 et l'ouverture d'entrée 34.

L'extrémité supérieure du corps de pompe 24 comprend une bride 48 s'étendant radialement vers l'extérieur qui est adaptée à comprimer un joint (non représenté) sur la surface supérieure du col du réservoir.

La pompe comprend une tige d'actionnement 50 qui comporte une partie inférieure ou tige inférieure 52, une partie supérieure ou tige supérieure 54, et un bouton-poussoir 56. La tige inférieure 52 et la tige supérieure. 54 sont fixées ensemble et ne peuvent pas se déplacer l'une par rapport à l'autre. Le bouton-poussoir 56 est fixé au sommet de la tige supérieure 54 pour se déplacer avec la tige supérieure 54 et la tige inférieure 52.

Un piston 60 est monté sur la tige d'actionnement 50 dans la partie supérieure 28 de la chambre de pompe 26. Le piston 60 est monté coulissant dans le corps de pompe 24.

Une virole 62 est disposée à l'extrémité supérieure du corps de pompe 24 et agit pour empêcher les composants de la pompe de sortie du corps de pompe 24. L'extrémité inférieure 70 de la virole 62 définit la position de repos élevée du piston et de la tige d'actionnement.

Le poussoir 56 est emmanché sur l'extrémité supérieure 76 de la partie supérieure 54 de la tige d'actionnement et communique avec l'extérieur à travers une cavité 74 et un passage de décharge 72. En outre, la partie supérieure 54 est emmanchée sur la partie inférieure 52 par l'intermédiaire d'un manchon 82.

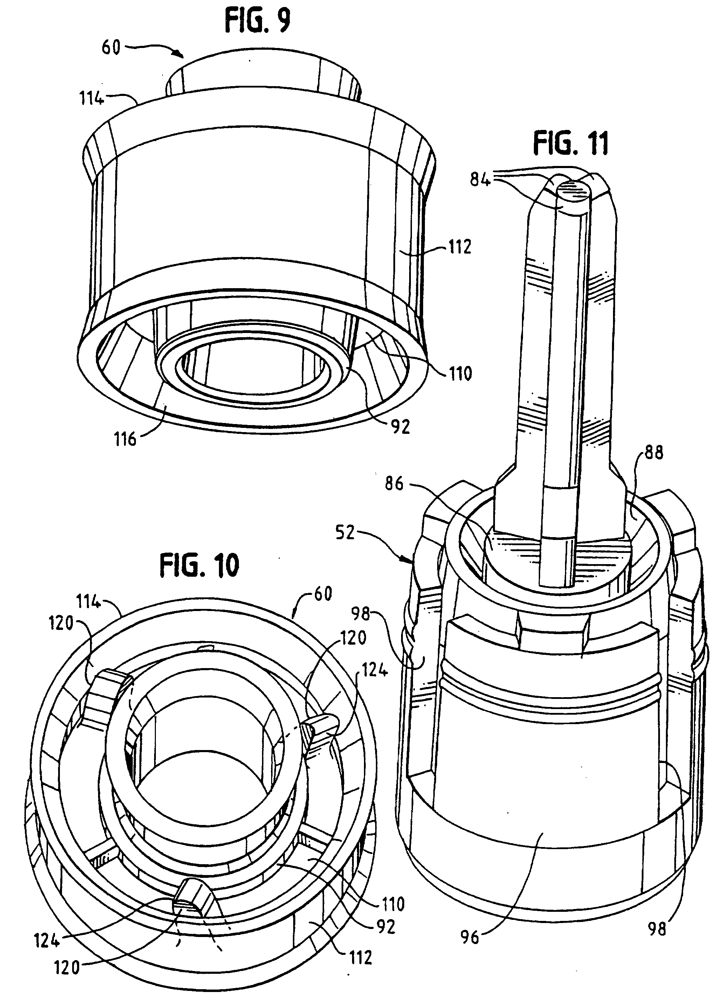

Comme représenté sur les figures 1 et 9, la tige inférieure 52 comporte une partie d'extrémité supérieure allongée définie par trois parois jointives 84 formant entre elles des angles de 120°. Les parois 84 définissent ainsi entre elles trois passages de sortie définis par des portions de camembert de 120°. Le piston 60 comprend un élément de clapet ou paroi interne annulaire 92 ayant un bord inférieur qui est adapté à venir en contact étanche avec le siège de clapet 88 autour de la circonférence de la rainure annulaire de la tige inférieure lorsque la pompe est dans la position représentée sur la figure 1. Ceci empêche tout écoulement de liquide à partir de la chambre de pompe 26 dans les passages le long des parois 84 de la tige inférieure à travers la tige supérieure 54 et dans le bouton-poussoir 56.

L'extrémité de fond de la tige inférieure 52 comprend une paroi sensiblement cylindrique 96 qui définit une pluralité de fentes verticales espacées circonférentiellement 98. La paroi annulaire 96 reçoit l'extrémité supérieure d'un ressort de rappel 102. Le ressort de rappel sollicite la tige d'actionnement dans la position de repos représentée sur la figure 1.

Le piston 60 qui est monté sur la tige d'actionnement 50 présente une configuration qui permet son déplacement par rapport aux tiges supérieure et inférieure dans certaines conditions. En particulier, comme représenté sur les figures 1, 9 et 10, le piston 60 comprend une paroi transversale annulaire 110 s'étendant radialement vers l'extérieur à partir de l'élément de clapet de paroi interne annulaire 92. La paroi transversale 110 se termine par une bague externe ou paroi externe généralement annulaire 112. Comme représenté sur les figures 1 et 9, la bague ou paroi externe 112 comporte une lèvre de piston supérieure 114 et une lèvre de piston inférieure 116 qui sont en prise étanche de coulissement avec la surface intérieure de la partie cylindrique supérieure de la chambre de pompe.

En se référant maintenant à la figure 10, on voit que le piston 14 comprend un ressort de rappel de piston qui comprend trois ergots 120. Bien entendu, ce nombre n'est pas limitatif. De préférence chaque ergot 120 est moulé à partir d'un matériau thermoplastique sous la forme d'un prolongement unitaire de la paroi transversale de piston 110 entre l'élément de clapet interne annulaire 92 et la bague externe annulaire 112. Bien entendu, n'importe quel autre matériau résilient approprié peut être utilisé.

Comme on peut le voir sur la figure 7, chaque ergot 120 a une extrémité distale décalée latéralement 124 qui peut fléchir de manière résiliente vers la paroi transversale 110 du piston 60. La partie de tige supérieure 54 comprend une paroi annulaire généralement cylindrique 130 (fig. 1) qui a une surface de portée annulaire 132 tournée vers le bas contre laquelle les extrémités distales supérieures des ergots 120 viennent en contact.

Lorsque la pompe est dans sa position de repos représentée sur les figures 1 et 7, les ergots 120 sont soumis à une contrainte minimum, de sorte que chaque ergot fait saillie à partir de la paroi transversale 110 avec une hauteur maximale. Le fond de la paroi interne annulaire du piston ou élément de clapet 92 est en prise étanche avec le siège de clapet 88 de la tige inférieure alors que l'extrémité supérieure de chaque ergot 120 est en prise avec la surface de fond 132 de la tige supérieure 54. Le bord supérieur de la lèvre supérieure de piston 114 est en prise avec la surface de fond de l'extrémité tubulaire 70 de la virole 62. Les ergots sont alors tels que représentés sur la figure 7.

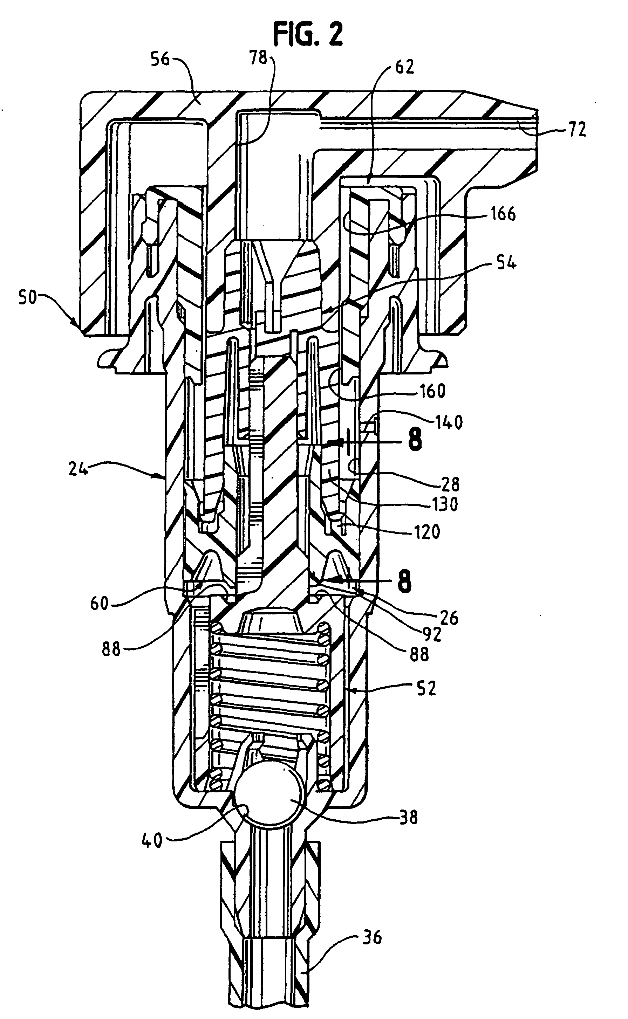

Dès lors que l'on exerce une pression sur le poussoir par exemple à l'aide d'un doigt, la tige d'actionnement s'enfonce dans le corps de pompe et fait augmenter la pression à l'intérieur de la chambre de pompe remplie de liquide. Etant donné que le liquide est incompressible, le volume de la chambre de pompe reste par conséquent constant et un abaissement de la tige d'actionnement, qui entraîne une diminution de volume, doit être compensé par la remontée du piston 60. La remontée du piston sur la tige d'actionnement entraîne une déformation par fléchissement des ergots 120, comme on peut le voir sur la figure 8. La résilience des ergots à la déformation par fléchissement détermine donc directement la force de précompression qu'il est nécessaire d'appliquer sur le poussoir pour ouvrir le passage de décharge. En d'autres termes, si la pression exercée sur le poussoir n'est pas suffisante pour déformer les ergots, l'élément de clapet 92 reste en prise étanche avec le siège de clapet 88. Dès que la pression dépasse la force nécessaire au fléchissement des ergots, le piston 60 peut se déplacer sur la tige d'actionnement de manière à ouvrir le passage de décharge en déformant les ergots. La figure 2 représente la pompe dans cette phase de distribution dans laquelle le piston ouvre le passage de décharge.

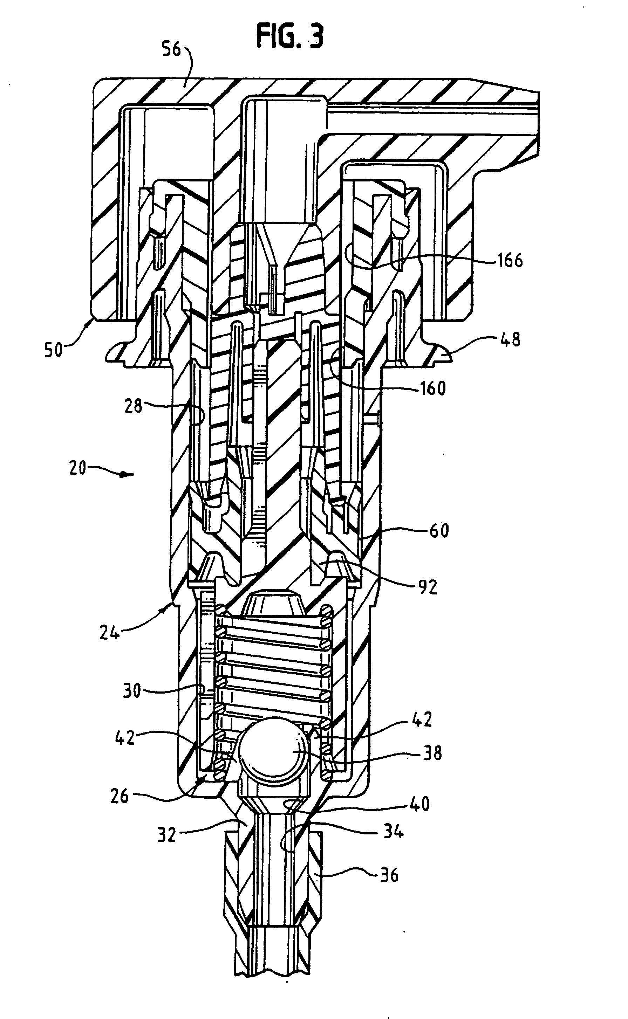

Dès que la pression à l'intérieur de la chambre de pompe est retombée en dessous d'une valeur permettant le fléchissement des ergots, le piston 60 se déplace à nouveau sur la tige d'actionnement sous l'effet des ergots qui reprennent leur forme initiale de repos représenté sur la figure 9 de manière à obturer le passage de décharge, ce qui se fait par le retour de l'élément de clapet 92 sur son siège de clapet 88. Cette phase de fonctionnement correspond à la figure 3. La paroi cylindrique 96 est alors en butée sur le fond du corps de pompe. Dès lors que l'on relâche la pression sur le poussoir, la tige d'actionnement remonte sous l'effet du ressort de rappel 102. Etant donné que le clapet de sortie est obturé par le piston, il se crée à l'intérieur de la chambre de pompe une dépression qui a pour effet de décoller la bille 38 de son siège tronconique 40 ce qui permet une remontée de liquide à travers le tube plongeur jusque dans la chambre de pompe de manière à la remplir. La remontée de la tige d'actionnement correspond donc à une phase d'aspiration de liquide. En fin de course, la pompe est à nouveau telle que représentée sur la figure 1 avec une chambre de pompe remplie de liquide. Elle est alors prête pour un nouvel actionnement.

Il doit également être noté que chaque ergot de ressort de piston 120 effectue un fléchissement latéral hors de l'axe vertical comme on peut le voir sur la figure 8. Ce fléchissement ne s'effectue ni vers la tige d'actionnement, ni vers le corps de pompe mais reste inscrit dans un cercle fictif concentrique à la tige d'actionnement. Le fléchissement n'a donc pas de composante radiale. Cette détermination de l'orientation du fléchissement des ergots est directement dépendante de la configuration des ergots en positon de repos. En effet, les ergots au repos sont légèrement inclinés comme on peut le voir sur la figure 7 de sorte qu'ils fléchiront automatiquement du côté où ils sont inclinés.

L'utilisation d'ergots de ressort 120 fournit un contrôle plus précis du déplacement relatif entre le piston 60 et la tige d'actionnement 50. Ceci est une amélioration par rapport aux conceptions conventionnelles dans lesquelles le déplacement du piston par rapport à la tige est uniquement commandé par un contact de frottement entre les surfaces du piston et les surfaces de la tige. Dans de telles pompes conventionnelles, il est difficile de fournir une force de frottement constante ou prédéterminée du fait des tolérances de fabrication que l'on rencontre dans les opérations de moulage thermoplastique typiques. L'utilisation d'ergots de ressort 120 selon la présente invention permet une fabrication plus économique, une qualité de production supérieure et des paramètres de fonctionnement cohérents d'unité à unité avec une plus haute fiabilité.

Il sera apprécié que d'autres configurations de conceptions peuvent être utilisées pour chaque ergot de ressort de rappel de piston. Un ou plusieurs ergot(s) peuvent par exemple être formés ou moulés en tant que partie intégrante de l'extrémité de fond de la paroi annulaire externe 130 de la tige supérieure. Il est également envisageable de prévoir un ou plusieurs ergot(s) sur un élément séparé à la fois du piston et de la tige d'actionnement. Un tel élément serait libre mais piégé entre la tige supérieure 54 et le piston 60.

Pour la reprise d'air, c'est-à-dire l'entrée d'air dans le réservoir à mesure que du produit est distribué, il est prévu que la paroi annulaire extérieure 130 de la tige supérieure présente une surface extérieure légèrement conique tout comme la surface interne de la virole 60. Lorsque la pompe 20 est dans sa position de repos représentée sur la figure 1, ces surfaces coniques sont en contact étanche. La partie supérieure de la surface intérieure de la virole 60 définit une pluralité de canaux verticaux espacés 166 comme représenté sur la figure 4. Un des canaux 166 peut également être vu sur le coté droit de la pompe des figures 1 à 3. Comme représenté sur la figure 2, lorsque la tige d'actionnement 50 est enfoncée, les surfaces coniques de la tige et de la virole se séparent pour définir un canal d'écoulement 160 qui communique avec les fentes verticales 166.

Le canal 160 et les fentes 166 font partie d'un chemin d'écoulement plus long qui est ouvert entre l'intérieur du réservoir et l'extérieur, dès que le piston 60 se déplace vers le bas avec la tige d'actionnement 50. ceci assure que l'intérieur du réservoir sera toujours à la pression atmosphérique. Ce chemin d'écoulement plus long définit un système d'éventation qui comprend un orifice 140 (fig. 2) défini dans la paroi du corps de pompe 24. Lorsque le piston 60 est en-dessous de l'orifice 140 comme représenté sur la figure 2, l'orifice 140 fait communiquer l'espace au-dessus du liquide dans le réservoir avec la partie cylindrique 28 de la chambre de pompe au-dessus du piston 60. Ainsi, lorsque le piston 60 est en-dessous de l'orifice 140 comme représenté sur la figure 2, l'air extérieur peut pénétrer dans le réservoir en passant en-dessous du poussoir 56, à travers les fentes 166, à travers l'espace situé entre les parois coniques de la tige d'actionnement et de la virole, à travers la partie cylindrique supérieure 28 de la chambre de pompe au-dessus du piston 60, et à travers l'orifice 140. Lorsque la force sur le poussoir 56 est relâchée, le ressort de rappel 102 pousse la tige d'actionnement vers le haut vers la position de repos. Dans cette position, la lèvre 114 du piston est située au-dessus de l'orifice 140 et la lèvre inférieure 116 est située en-dessous de l'orifice 140. Ainsi, l'orifice 140 est obturé, empêchant ainsi toute fuite à travers l'orifice 140 même si le réservoir est retourné.

## Revendications

1. Pompe manuelle comprenant :
un corps de pompe (24) définissant une chambre (26) ayant une ouverture d'entrée (34) et une ouverture de sortie (88) ;
un clapet anti-retour (38) situé au niveau de l'ouverture d'entrée (34) ;
une tige d'actionnement (50) faisant saillie hors de la chambre pour se déplacer en va-et-vient entre une position haute non actionnée et une position basse complètement actionnée, ladite tige d'actionnement ayant des parties supérieure (54) et inférieure (52) définissant ensemble un passage de décharge établissant une communication entre l'atmosphère et ladite chambre, la partie inférieure de la tige d'actionnement définissant un siège de clapet au niveau dudit passage de décharge ;
un ressort de rappel (102) pour la tige d'actionnement (50) agissant entre ledit corps de pompe (24) et la partie inférieure (52) de la tige d'actionnement pour la solliciter par rapport audit corps de pompe vers la position de repos ;
un piston (60) supporté par ladite tige d'actionnement (50) dans ladite chambre de pompe (26) en prise étanche de glissement avec ledit corps de pompe (24) pour effectuer un déplacement par rapport à la tige d'actionnement entre (a) une position fermée étanche contre le siège de clapet (88) pour obturer ledit passage de décharge, et (b) une position ouverte en éloignement du siège de clapet, ledit piston (60) comprenant un élément de clapet interne annulaire (92) destiné à venir en prise étanche avec ledit siège de clapet (88), ledit piston (60) comprenant une bague externe annulaire (112) en prise étanche de glissement avec une surface intérieure (28) dudit corps de pompe (24) , et
un ressort de rappel du piston (120) agissant entre ledit piston (60) et la partie supérieure (54) de la tige d'actionnement (50) pour solliciter ledit piston dans ladite position fermée, ledit ressort de rappel du piston étant constitué par au moins un ergot (120) qui peut fléchir de manière résiliente,
**caractérisé en ce que** ledit au moins un ergot (120) est situé entre ladite bague externe annulaire et ledit élément de clapet interne annulaire.

2. Pompe selon la revendication 1, dans laquelle ledit ressort de rappel du piston (120) est moulé dans un matériau thermoplastique sous la forme d'au moins un ergot (120) en tant que prolongement du piston.

3. Pompe selon la revendication 1, dans laquelle ledit ressort de rappel du piston (120) est moulé dans un matériau thermoplastique sous la forme d'au moins un ergot (120) en tant que prolongement de ladite partie supérieure (54) de la tige d'actionnement (50).

4. Pompe selon la revendication 1, dans laquelle ledit ressort de rappel du piston (120) est séparé à la fois dudit piston (60) et de ladite tige d'actionnement (50).

5. Pompe selon l'une quelconque des revendications précédentes, dans laquelle ledit ressort de rappel du piston comprend trois ergots (120).

6. Pompe selon l'une quelconque des revendications précédentes, dans laquelle ledit ergot ayant une extrémité distale décalée latéralement qui peut être fléchie de manière résiliente vers ledit piston pour réaliser la séparation de ladite tige de soupape interne du piston et dudit siège de soupape de la partie inférieure de l'organe d'actionnement lorsque la pression à l'intérieur de ladite chambre augmente suffisamment.

7. Pompe l'une quelconque des revendications **précédentes,** dans laquelle ledit au moins ergot effectue un fléchissement latéral sans faire de fléchissement radial vers l'extérieur en direction dudit corps de pompe.

8. Pompe l'une quelconque des revendications précédentes, dans laquelle ladite partie supérieure (54) de la tige d'actionnement (50) comprend une paroi annulaire (130) généralement cylindrique définissant une surface de support annulaire (132) tournée vers le bas destinée à venir en prise avec ledit au moins un ergot (120).

9. Pompe l'une quelconque des revendications précédentes, dans laquelle ladite tige d'actionnement (50) comprend un bouton-poussoir (56) définissant une cavité de distribution et un orifice de distribution (74) communiquant ; et
ledit passage de décharge est défini en partie par trois voies de passage parallèles qui s'étendent à partir dudit siège de clapet (88) à une extrémité vers ladite cavité de distribution (74) à l'autre extrémité.

10. Pompe l'une quelconque des revendications précédentes, dans laquelle la partie supérieure (54) de la tige d'actionnement et la partie inférieure (52) de la tige d'actionnement sont moulées dans un matériau thermoplastique en tant que pièces séparées qui sont ensuite fixées ensemble pour former une structure monobloc.

## Patentansprüche

1. Handpumpe, die folgende Bestandteile umfasst:
Einen Pumpenkörper (24), der eine Kammer (26) aufweist, die eine Eintrittsöffnung (34) und eine Austrittsöffnung (88) besitzt,
ein Rückschlagventil (38), das im Bereich der Eintrittsöffnung (34) angeordnet ist,
eine Betätigungsstange (50), die über die Kammer hinaus vorspringt, um sich zwischen einer oberen nicht betätigten Stellung und einer unteren vollständig betätigten Stellung hin und her zu bewegen, wobei die Betätigungsstange einen oberen Teil (54) und einen unteren Teil (52) aufweist, die gemeinsam einen Abgabedurchgang umschließen, der eine Verbindung zwischen der Atmosphäre und der Kammer herstellt, wobei der untere Teil der Betätigungsstange einen Ventilsitz im Bereich des Entladedurchganges aufweist,
eine Rückholfeder (102) für die Betätigungsstange (50), die zwischen dem Pumpenkörper (24) und dem unteren Teil (42) der Betätigungsstange wirkt, um diese bezüglich des Pumpenkörpers zur Ruhelage hin vorzuspannen,
einen Kolben (60), der von der Betätigungsstange (50) in der Pumpenkammer (26) in dichtem Gleiteingriff mit dem Pumpenkörper (24) getragen wird, um eine Verschiebung bezüglich der Betätigungsstange zwischen (a) einer dichten geschlossenen Position in Anlage am Ventilsitz (88) zum Verschließen des Abgabedurchganges und (b) einer offenen, vom Ventilsitz abgehobenen Stellung zu bewirken, wobei der Kolben (60) ein inneres ringförmiges Ventilelement (92) umfasst, das dazu dient, in dichtem Eingriff mit dem Ventilsitz (88) zu treten, wobei der Kolben (60) einen äußeren kreisförmigen Ring (112) in dichtem Gleiteingriff mit einer inneren Oberfläche (28) des Pumpenkörpers (24) aufweist, und
eine Rückholfeder (120) für den Kolben, die zwischen dem Kolben (60) und dem oberen Teil (54) der Betätigungsstange (50) wirkt, um den Kolben in die geschlossene Stellung vorzuspannen, wobei die Rückholfeder für den Kolben von wenigstens einem Vorsprung (120) gebildet wird, der sich in elastischer Weise abbiegen kann,
**dadurch gekennzeichnet, daß** der wenigstens eine Vorsprung (120) zwischen dem äußeren kreisförmigen Ring und dem inneren ringförmigen Ventilelement vorgesehen ist.

2. Pumpe nach Anspruch 1, bei der die Rückholfeder (120) für den Kolben aus einem thermoplastischen Material in Form wenigstens eines Vorsprunges (120) in Verlängerung des Kolbens ausgebildet ist.

3. Pumpe nach Anspruch 1, bei der die Rückholfeder (120) für den Kolben aus einem thermoplastischen Material in Form wenigstens eines Vorsprunges (120) in Verlängerung des oberen Teils (54) der Betätigungsstange (50) ausgebildet ist.

4. Pumpe nach Anspruch 1, bei der die Rückholfeder (120) für den Kolben gleichzeitig von dem Kolben (60) und der Betätigungsstange (50) getrennt ist.

5. Pumpe nach einem der vorhergehenden Ansprüche, bei der die Rückholfeder für den Kolben drei Vorsprünge (120) umfaßt.

6. Pumpe nach einem der vorhergehenden Ansprüche, bei der der Vorsprung ein distales, seitlich geneigtes Ende besitzt, das in elastischer Weise zu dem Kolben hin abgebogen werden kann, um die Trennung der inneren Ventilstange des Kolbens und des Ventilsitzes des unteren Teils des Betätigungsorganes auszuführen, wenn der Druck im Inneren der Kammer ausreichend ansteigt.

7. Pumpe nach einem der vorhergehenden Ansprüche, bei der der wenigstens eine Vorsprung eine seitliche Abbiegung ausführt, ohne eine radiale Abbiegung nach außen in Richtung des Pumpenkörpers hin auszuführen.

8. Pumpe nach einem der vorhergehenden Ansprüche, bei der der obere Teil (54) der Betätigungsstange (50) eine ringförmige Wand (130) umfasst, die im wesentlichen zylindrisch ist, und eine ringförmige Tragoberfläche (132) aufweist, die nach unten gerichtet ist und dazu dient, mit dem wenigstens einen Vorsprung (120) in Eingriff zu treten.

9. Pumpe nach einem der vorhergehenden Ansprüche, bei der die Betätigungsstange (50) einen Drücker (56) umfasst, der einen Abgabehohlraum und eine hiermit in Verbindung stehende Abgabeöffnung (74) aufweist, wobei der Abgabedurchgang zum Teil von drei parallelen Durchgangswegen gebildet wird, die sich ausgehend vom Ventilsitz (88) an einem Ende zu dem Abgabehohlraum (74) am anderen Ende hin erstrecken.

10. Pumpe nach einem der vorhergehenden Ansprüche, bei der der obere Teil (54) der Betätigungsstange und der untere Teil (52) der Betätigungsstange aus einem thermoplastischen Material als voneinander getrennte Teile geformt sind, die danach aneinander befestigt werden, um eine einstückige Struktur zu bilden.

## Claims

1. Manually actuated pump comprising:
a pump body (24) containing a chamber (26) that is provided with an inlet opening (34) and an outlet opening (88);
a check valve (38) located on the inlet opening (34);
a actuating plunger (50) that projects out of the chamber in order to be displaced backwards and forwards between a non-actuated upper position and a fully actuated lower position, said actuating plunger comprising upper sections (54) and lower sections (52) together defining a discharge passage that connects the said chamber to the atmosphere, the lower section of the actuating plunger forming a valve seat at said discharge passage;
a return spring (102) for the actuating plunger (50) that acts between said pump body (24) and the lower section (52) of the plunger for biasing the plunger into the rest position relative to said pump body;
a piston (60) carried by said actuating plunger (50) in said pump chamber (26) in sliding leaktight contact with pump body (24) capable of being displaced in relation to the actuating plunger between (a) a closed position sealed against the valve seat (88) in order to seal said discharge passage and (b) an open position remote from the valve seat, said piston (60) comprising an internal annular valve member (92) that is intended to come into leaktight contact with valve seat (88), said piston (60) comprising an external annular ring (112) in sliding leaktight contact with an internal surface (28) of said pump body (24); and
a piston return spring (120) that acts between said piston (60) and upper section (54) of the actuating plunger (50) for biasing said piston into said closed position, said piston return spring comprising at least one post (120) which is resiliently bendable,
**characterized in that** said at least one post (120) is located between said external annular ring and said internal annular valve member.

2. Pump according to claim 1, in which said piston return spring (120) is molded from thermoplastic material in the form of at least one post (120) as an extension of the piston.

3. Pump according to claim 1, in which said piston return spring (120) is molded from thermoplastic material in the form of at least one post (120) as an extension of said upper section (54) of the actuating plunger (50).

4. Pump according to claim 1, in which said piston return spring (120) is separated from both said piston (60) and said actuating plunger (50).

5. Pump according to any of the preceding claims, in which said piston return spring comprises three posts (120) .

6. Pump according to any of the preceding claims, in which said post has a distal end that is laterally offset and that can be resiliently bent towards said piston in order to separate said piston from said valve seat of the lower section of the actuating device when the pressure inside said chamber increases sufficiently.

7. Pump according to any of the preceding claims, in which said at least one post is bent laterally without bending radially towards the outside in the direction of said pump body.

8. Pump according to any of the preceding claims, in which said upper section (54) of the actuating plunger (50) comprises an annular surface (130) that is cylindrical in shape and forms an annular bearing surface (132) that is turned downwards and is intended to come into contact with said at least one post (120).

9. Pump according to any of the preceding claims, in which said actuating plunger (50) comprises a push-button (56) that contains a distribution cavity and connects to a distribution orifice (74), and
said discharge passage is partially contained within three parallel channels that extend from said valve seat (88) at one end towards a distribution cavity (74) at the other end.

10. Pump according to any of the preceding claims, in which the upper section (54) of the actuating plunger and the lower section (52) of the actuating plunger are molded from thermoplastic material as separate parts that are subsequently fastened together to form a single unit structure.
